# EUROPEAN PATENT SPECIFICATION

(11) **EP 0 868 497 B1**
(45) Date of publication and mention of the grant of the patent: **27.12.2000**
(21) Application number: 96934139.5
(22) Date of filing: 09.10.1996
(51) Int. Cl.: C09J 133/06, C09J 7/02

(54) **REPULPABLE PRESSURE SENSITIVE ADHESIVE BASED ON MICROSPHERES AND ARTICLES MADE THEREFROM**
WIEDERAUFBEREITBARER HAFTKLEBSTOFF AUF DER BASIS VON MIKROKÜGELCHEN UND DARAUS HERGESTELLTE GEGENSTÄNDE
ADHESIF SENSIBLE A LA PRESSION ET RETRITURABLE A BASE DE MICROSPHERES, ET ARTICLES FABRIQUES AVEC LUI

(30) Priority: 10.10.1995 US 4976 P
(43) Date of publication of application: 07.10.1998
(73) Proprietor: MINNESOTA MINING AND MANUFACTURING COMPANY, St. Paul, Minnesota 55133-3427 (US)
(72) Inventor: BOHNEL, Bernd, Saint Paul, MN 55133-3427 (US); HANSON, Gary, R., Saint Paul, MN 55133-3427 (US)
(74) Representative: VOSSIUS & PARTNER
(86) International application number: US9616163
(87) International publication number: WO9713819

(56) References cited:
- WO-A-95/27016
- FR-A- 2 158 266
- GB-A- 2 280 659
- US-A- 3 441 430
- US-A- 4 645 783
- US-A- 5 196 504

## Description

The present invention relates to repulpable pressure sensitive adhesive, the process of making the same and in particular pressure sensitive adhesive useful for making repulpable articles such as office tapes, splicing tapes, labels and similar products.

Conventional pressure sensitive adhesives are typically non-compatible with the repulping process. These conventional pressure sensitive adhesives are generally insoluble and non-dispersible in aqueous pulp medium and, depending on their chemical make-up, accumulate as "stickies" in repulped paper product and/or white-water, degrading the quality of both.

Although there are a number of pressure sensitive adhesives claiming to provide repulpability the overall compatibility with the repulping process is less than ideal. Furthermore, it has been a general trend that improved repulpability can lead to loss of adhesive performance. While some pressure sensitive adhesives do not adversely affect the quality of the repulped paper, they can accumulate in the white-water, reducing its quality and recyclability. Furthermore, commercial pressure sensitive adhesives of this kind have traditionally shown a performance that is not suited for applications such as an office tape, e.g., an adhesion that is extremely humidity dependent, loss of adhesion on aging and undesired polymer migration at high humidities. See, e.g. US. Patent Nos. 3,441,430; 3,661,874; 3,865,770; 4,413,080; 4,569,960; 4,992,501; 5,196,504; 5,229,447; and 5,512,612.

Another class of adhesives that has been identified as repulpable include water-dispersible pressure sensitive adhesives. Examples of such adhesives include tacky microspheres, such as described in U.S. Patent Nos. 3,691,140 and 4,155,152. While such pressure sensitive adhesives, at appropriately low coating weights, may sufficiently disperse during the repulping process, the microspheres can accumulate as "stickies" in recycled paper product and/or white-water, irreparably degrading the quality of both.

The present invention provides a repulpable pressure sensitive adhesive that exhibits improved performance characteristics as compared to what is currently available in the art. Pressure sensitive adhesives of the present invention exhibit aggressive adhesion over a broad range of humidity conditions, are able to maintain this level of performance after prolonged aging periods and when laminated to paper will not stain the paper because of polymer migration.

In one aspect of the present invention, a pressure sensitive adhesive is provided comprising a mixture of a plurality of water-insoluble, water-dispersible, polymeric microspheres and at least one water-soluble plasticizing agent, wherein the average diameter of the microspheres is below 50 micrometers. Generally, the polymeric microspheres are non-tacky, although tacky microspheres may also be used.

Advantageously, the pressure sensitive adhesive of the present invention is uniquely compatible with the process of repulping. While a completely repulpable product is desired, that is an article with a repulpable backing and a repulpable adhesive, it can be advantageous to use the adhesive of the present invention to produce a partially repulpable article, one in which the adhesive is repulpable (or redispersible), while the backing remains intact sufficiently to be screened from the repulping process.

Pressure sensitive adhesives of the present invention may disintegrate into two components affording pulp material free of undesirable stickies. During the repulping process, microsphere material, finely dispersed, remains largely in the paper fibers, while the remaining components are either retained in the white water or removed via floatation.

Thus, this adhesive represents an excellent compatibility with the repulping process. There are a number of advantages provided by the present invention and include the following: (a) the pressure sensitive adhesive is permanently detackified; (b) white-water is free of contamination and recyclable, merely retaining benign plasticizing agent that is commonly present during repulping as a dispersing agent; and (c) the paper fibers retaining essentially non-tacky microspheres generally exhibit an undiminished quality.

Repulpable pressure sensitive adhesive compositions of this invention comprise the blended mixture of:
(a) 100 parts by dry weight of carboxylated polymeric microspheres, formed by suspension polymerization from monomers consisting essentially of:
   (1) about 50-90 weight percent of at least one monomeric alkyl (meth)acrylate of alkyl alcohol having 4-14 carbon atoms and,
   (2) about 50-10 weight percent of vinyl carboxylic acid,
(b) about 5-150 parts by weight of at least one water-soluble plasticizing polyalkyleneoxy compound per 100 parts by dry weight of carboxylated polymeric microspheres and,
(c) optionally, 0.2-2.0 parts by weight of mineral acid per 100 parts by dry weight of carboxylated polymeric microspheres.

Polymeric microspheres are synthesized by aqueous suspension polymerization. While non-tacky polymeric microspheres are preferred, tacky microspheres can be used. A particularly useful process for suspension polymerization is described in U.S. Patent No. 4,786,696 from monomeric alkyl(meth)acrylates and about 10-50 weight percent of vinyl carboxylic acids that include methyl acrylate, butyl acrylate, isooctyl acrylate and acrylic acid and methacrylic acid, respectively. Lower levels of vinyl carboxylic acid tended to produce pressure sensitive adhesive compositions with unacceptable repulpability, while higher levels of the same tended to produce pressure sensitive adhesive compositions with excessive viscosity, although both lower and higher levels could be used depending upon the final combination of components, such that the combination provided the necessary repulpability and maintained a reasonable (that is, coatable) viscosity. It should be recognized that to achieve specific results minor amounts or monomeric modifiers may be incorporated into polymeric microspheres; for example, methyl methacrylate to increase the firmness and 1,6-hexanediol diacrylate to increase the degree of crosslinking.

The polymerization process utilizes at least one substantially water-insoluble polymerization initiator, at least one emulsifier at a concentration above its critical micelle concentration and, optionally, chain transfer agent. Specific examples of these components include benzoyl peroxide, sodium dodecylbenzene sulfonate and carbon tetrabromide. Further, deionized water is utilized in an amount sufficient to provide polymer suspensions with a solids content in the range of 15 to 60 percent.

Prior to polymerization, the reaction mixture is emulsified to control the diameter of the forming polymeric microspheres, wherein the diameter is inversely related to the severity of the emulsification. The preferred diameter of polymeric microspheres is below 50 micrometers. Larger particles can be used in the adhesive compositions, although significantly larger particles could result in reduced adhesion. The preferred polymeric product exhibits repulpability and no appreciable pressure sensitive adhesive tack.

Typically useful plasticizing agents include but are not limited to polyalkyleneoxy compounds, such as octylphenoxy poly(ethyleneoxy)ethanol with an average number molecular weight of 624, nonylphenoxy poly(ethyleneoxy)ethanols with an average number molecular weight of 880 and 1100, and poly(ethylene glycol) with an average number molecular weight of 1000. Plasticizing agents are commercially available from Rohm & Haas (under the trade name of Triton X-100), Rhone-Poulenc (under the trade name of Igepal CO-730 and Igepal CO-850) and Aldrich Chemical Company, respectively. The amount of plasticizing agent employed in a particular pressure sensitive adhesive composition largely depends on the chemical composition of polymeric microspheres and is present in an amount sufficient to impart repulpability and a balanced peel adhesion/holding power performance.

Optionally, minor amounts of mineral acids can be added to pressure sensitive adhesive compositions to change their tacky nature. Examples include, but are not limited to phosphoric acid and polyphosphoric acid. Typically, mineral acids, if present are added in amounts ranging from 0.2 to 2.0 parts by weight per 100 parts of microspheres. Similarly, dyes, pigments, fillers, etc. may be added where necessary or desirable. Typically, these additives are added in amounts ranging from 0.01 to 20.0 parts by weight, depending upon the nature of the additive. If additives are present, they are present in amounts that are consistent with what is known in the art and are not in amounts that are detrimental to repulpability and adhesive strength. The glass transition temperature of the resulting pressure sensitive adhesive compositions are generally below about -20°C.

Tape constructions of the present invention mean any construction that includes a backing substrate, at least one layer of adhesive on the backing substrate and optionally, at least one layer of a release coating on the other surface of the backing substrate, this surface may or may not be processed to produce a low energy surface. Typically constructions include but are not limited to Scotch™ brand tape, Post-it® tape flags, labels, z-fold tape pads, tabbed tab pads, Pop-up™ tape, Post-it® note stacks, splicing tape, or z-fold pads.

In addition to the uses stated above, the repulpable adhesives of the present invention may be used as a tape and used for sterilization indicator tapes and labels, closure systems for envelopes, surgical wrappers and mammalian body coverings.

The tape backing of this invention is preferably a modified calque paper. "Calque" is French for natural translucent and generally refers to paper fabricated from an alkaline chemical thermomechanical pulping process.

Built into a preferred calque paper backing substrate is a release sizing composition that allows a matching unwind release to be formed on the back surface while still allowing for good unprimed adhesive anchorage to the front surface, although the addition of a release sizing is not required. This preferred embodiment eliminates the need for separate low adhesive backside and adhesive primer coating steps, thereby eliminating solvent and energy waste during these additional steps.

Typically, caique paper has a nominal caliper of 0.41-0.76 mm, preferably 0.46 to 0.61 mm more preferably 0.46 mm and moisture content of between 6-7.5% by weight. The translucency of the finished paper is typically greater than 70%, with a uniform appearance without specking. The reflectance (gloss) of the preferred paper is between 6-12 (dimensionless), as measured by TAPPI T4880-OM92. The preferred paper has a color of L>8.5, a=-2 to -0.6, b=2 to 5, as measured by TAPPI T254 and a surface smoothness of between 30-60 (dimensionless) as measured by TAPPI UM518. Such paper substrates are generally referred to as translucent "calque" papers.

Other backing materials are also useful in the present invention, provided they are repulpable or screenable in combination with the adhesive compositions of the present invention. Backing types and thicknesses are those that are typically known to those skilled in the art and include, for example bond paper, nonwovens, wovens, polymeric film, metallic foil, ceramic sheeting, cellulose acetate, ethyl cellulose film, polyester and polypropylene.

Examples of useful release sizing compositions include but are not limited to compositions that when applied to a substrate surface provide a release layer from which an adhesive coating can be cleanly removed. Typically, such compositions provide a surface release of between 152-762 gm/cm for the particular repulpable adhesive used, having a high degree of affinity for the surface of cellulosic fibers without affecting the repulpability of the paper not unduly contaminating the adhesive surface upon removal. Generally a release sizing composition is matched to the adhesive characteristics of a particular adhesive composition. A particularly useful release sizing composition for the preferred embodiment is made with a polysiloxane release agent (commercially available from Dow Corning). The release sizing agent consists of a solution of 0.5 to 30 parts by weight of a polysiloxane release agent (Syl-Off 1171, a 50% solids aqueous emulsion), mixed with 0.01 to 6.0 parts by weight of a tin catalyst (Syl-Off 1171A, a 50% solids aqueous emulsion) (both commercially available from Dow Corning) in 64 to 98.5 parts by weight of water. The solution was applied onto the "modified" calque paper by means of an air knife size press, coated and cured in line. The sized paper is then remoisturized and dried in the normal manner on the size press to achieve a flat, stable paper backing.

The "calque" paper backing thus coated on one-side with a release-sizing agent was coated on the other side with an adhesive composition of the present invention in a coating thickness range of 0.05 to 0.64 mm, preferably from 0.08 to 0.38 mm. The coated web was dried by passing through an oven at about 110°C for about 15 seconds, or whatever time was necessary to dry the coating(s). The adhesive coated substrate was then wound upon itself forming a jumbo roll with the pressure sensitive adhesive coating on the inside of the roll. From this jumbo roll, using a variety of currently available processes, typical smaller rolls and tape pads were produced.

Coating thicknesses and/or coating weights of the various components, such as the adhesive layer, release layer coating and release sizing composition layer can be varied depending on the final application or use of the tape construction. Such coating weights are well known and available to those skilled.

Examples of particularly useful constructions include but are not limited to:
(a) tape construction comprising (1) a paper backing substrate, (2) a pressure sensitive adhesive layer coated onto one face of the backing substrate and (3) a release layer composition coated onto the other face of the backing substrate;
(b) a sheet comprising a layer of paper backing substrate, such as label stock having a coating of repulpable (redispersible) pressure sensitive adhesive on a second end portion, while being free of adhesive along a first end portion;
(c) a pad of sheets in a stack, each of the sheets comprising a layer of paper backing substrate, having opposite major side surfaces and first and second opposite ends, and having a coating of a redispersible pressure sensitive adhesive on a second end portion of one of the side surfaces adjacent the second end while being free of adhesive on both of the side surfaces along a first end portion thereof adjacent the first side, the sheets being releasable adhered to each other by the coatings of the pressure sensitive adhesive to form a stack with adjacent ends of the sheet aligned and with the first and second end of the successive sheets in the stack being adjacent;
(d) an adhesive coated sheet of labels, comprising (1) a paper backing substrate, (2) redispersible pressure sensitive adhesive layer coated onto one face of the backing substrate and (3) a release layer composition coated onto the other face of the backing substrate;
(e) an adhesive tape comprising a layer of a repulpable adhesive on at least a portion of a first side of a backing substrate, and a layer of a release agent on at least a portion of the second side of the backing substrate, the second side of the backing substrate being opposite the first side of the backing substrate;
(f) an adhesive tape comprising a layer of a repulpable adhesive on at least a portion of a first side of a background substrate, and a second layer of repulpable adhesive on at least a portion of the second side of the backing substrate, the second side of the backing substrate being opposite the first side of the backing substrate;
(g) a transfer tape comprising a layer of repulpable adhesive on at least a portion of a first side of a release liner; and
(h) any other combinations and variations that can be constructed using (1) optionally, a backing substrate, (2) a redispersible pressure sensitive adhesive layer coated on at least one major surface of the backing substrate, and (3) a release layer composition coated onto the other face of the backing substrate, when only one surface of the backing substrate is coated with an adhesive.

The objects, features and advantages of the present invention are further illustrated by the following examples, but the particular materials and amounts thereof recited in these examples, as well as other conditions and details, should not be construed to unduly limit this invention.

### Examples

In the examples, all parts, ratios, and percents are by weight unless specifically indicated otherwise. All materials are commercially available or known in the art, unless otherwise stated or apparent. Specifically, the acrylic monomers are available from Scientific Polymer Products, Inc. All examples were prepared in ambient atmosphere (in the presence of usual amounts for oxygen and water vapor) unless indicated otherwise.

### Test Procedures

The following procedures were used to evaluate the characteristics of the repulpable pressure sensitive adhesive compositions of the present invention.

### Repulpability

Repulpability was tested according to TAPPI Test UM-213 ( described in "TAPPI Useful Methods, 1991", TAPPI Press, 1990) modified as follows. Two strips of tape, 2.5 cm by 10.2 cm (1 inch by 4 inches) and prepared by coating repulpable pressure sensitive adhesive of the present invention onto Calque paper were adhered to the opposite sides of a strip of blotter paper, 2.5 cm by 10.2 cm (1 inch by 4 inches). This laminated sample was cut into 1.3 cm (0.5 inch) squares. Blotter paper, also cut into 1.3 cm (0.5 inch) squares, was added to the cut laminated sample to bring the total weight of tape and paper to 15 grams. The squares of paper were placed in a Waring blender with 500 ml of water at a temperature of 32°C. The contents were then blended at about 15,000 revolutions per minute (rpm) for three 20 second periods to form a pulp. Handsheets were prepared from the pulp and dried. After drying, the handsheets were visually examined for particles of unrepulped tape. Then the handsheets were stained with Morplas Blue 1003, also known as Solvent Blue #36 dye (commercially available from Morton International) and visually reexamined for particles of unrepulped tape.

### Peel Adhesion

Peel adhesion was evaluated according to a test that is a modification of Test No. PSTC-1, wherein the angle of peel was 90° instead of the described 180° angle of peel. Test No. PSTC-1 is described in "Test Methods for Pressure Sensitive Adhesive Tapes," 7th Edition, Pressure Sensitive Adhesive Tape Council. A strip of a sample coated with a repulpable pressure sensitive adhesive of the present invention was adhered to a steel panel. The force required to remove the strip at an angle of 90° and at a rate of 30.5 cm (12 inches) per minute was recorded in Newtons per decimeter.

### Holding Power

Holding power was evaluated according to a test that is a modification of Test No. PSTC-7, wherein the temperature of application was 23°C instead of the described temperature of 49°C. Test No. PSTC-7 is described in "Test Methods for Pressure Sensitive Adhesive Tapes," 7th Edition, Pressure Sensitive Adhesive Tape Council. A strip of a sample coated with the repulpable pressure sensitive adhesive was adhered to a steel panel, to cover an area of 1.3 cm by 1.3 cm (0.50 by 0.50 inches). The time elapsed for the coated sample to separate at a temperature of 23°C and under a load of 1000 grams was recorded.

### Ease of Adhesive Removal with Water

The difficulty of adhesive removal was evaluated by washing with plain water (23°C, pH 8.5 and a hardness of 5 grains) a 155 cm² (1/2") square of tape applied to various surfaces and aged for 24 hours. The various surfaces included:
glass (Essential Supply Stock Catalog);
plastic (ABS Acrylonitrile butadiene styrene - Sterling Plastics Inc.);
lacquer wood (#777 Test Oak Panels - Pikus Enterprises, Coon Rapids, MN);
painted steel (SteelCase Paint Samples Tan Value 1 - General Office Products, Minneapolis, MN); and
painted wallboard (EZ-1 White Latex Flat Enamel - General Paint & Chemical Co., Chicago IL).

The ease of removal was judged by how many wipes with a wet cloth it took to completely remove the tape sample from a surface, after immersion in water for 1 minute.

If removal took less than 5 wipes it was considered very easy, if less than 10 wipes it was considered easy, if less than 15 it was considered good, if less than 20 it was considered fair, if less than 30 it was considered hard and if more than 40 wipes it was considered difficult. If removal with plain water was found to be less than easy, the test was repeated with soapy water (1 gram/l of Dreft™ detergent).

### Ease of Removal from Fabrics

The difficulty of tape removal was evaluated by machine washing various garments (32°C, pH 8.5 and a hardness of 5 grains) to which a 5 cm x 10 cm (2" x 4") piece of tape has been applied and aged for 24 hours. Garments included: cotton sheet, black smock (65% polyester/35% cotton), white T-shirt (50% polyester/50% combed cotton). The garments were washed with one cap full Tide™ liquid laundry detergent.

### Ease of Removal from Dishes

The difficulty of tape removal was evaluated by washing various dishes (32°C, pH 8.5 and a hardness of 5 grains) to which a 5 cm x 10 cm (2" x 4") piece of tape was applied and aged for 24 hours. Dishes included: ceramic plate, china cup, plastic plate, Tupperware™ container, Silverstone™ pan. The dishes were washed with Dial™ dishwashing Liquid 38 liter (10 gallons) of hot water with 10 milliliters of soap).

### Examples 1-33

### Example 1

This example illustrates the synthesis of carboxylated polymeric microspheres from isooctyl acrylate and acrylic acid.

A 5 liter resin reactor was charged with a solution of 0.50 gram of carbon tetrabromide and 4.5 grams of 70% solids benzoyl peroxide (both commercially available from Aldrich Chemical Company) in 1275 grams of isooctyl acrylate, 225 grams of acrylic acid and a solution of 14.0 grams of sodium dodecyl-benzene sulfonate (commercially available from Alcolac, Inc. under the trade name of Siponate DS-10) in 1550 grams of deionized water. The contents were emulsified for seven minutes using a high-shear, 3-bladed stirrer rotating at 4000 rpm. A reactor was then equipped with a thermometer, a reflux condenser, a three-pronged stirrer and a gas inlet tube. Agitation was set to 400 rpm and the reaction mixture was purged with nitrogen. The stirring and the nitrogen purge were maintained throughout the reaction period.

The contents were heated to 67°C and an exothermic reaction took place that was cooled with a water bath. After the reaction had subsided, the contents were heated to 80°C for 30 minutes and finally cooled to room temperature. The resulting product, a suspension of polymeric microspheres, had a solids content of 49.5%, a Brookfield viscosity of 10,800 cps and the average diameter of the microspheres was 6 micrometers. The glass transition temperature of the polymer was -44°C.

### Examples 2-6

These examples illustrate the synthesis of carboxylated polymeric microspheres from various monomers or various ratios of monomers.

The synthesis was performed according to the following general procedure and the ingredients respectively used are listed in Table 1.

**Table 1**

| **Example** | **Alkyl Acrylate** (grams) | **Vinyl Carboxylic Acid** (grams) | **Deinonized Water** (grams) |
|---|---|---|---|
| 2 | butyl acrylate (240) | acrylic acid (60) | 557 |
| 3 | isooctyl acrylate (240) | methacrylic acid (60) | 709 |
| 4 | isooctyl acrylate (262.5) | acrylic acid (37.5) | 557 |
| 5 | isooctyl acrylate (180) | acrylic acid (120) | 1211 |
| 6 | methyl acrylate (240) | acrylic acid (60) | 911 |

A 2 liter resin reactor was charged with a solution of 0.90 gram of 70% solids benzoyl peroxide in 300 grams of monomers and a solution of 2.8 grams Siponate DS-10 in deionized water. The contents were emulsified for two minutes using an Ansoldo homogenizer. The reactor was then equipped with a thermometer, a reflux condenser, a three-pronged stirrer and a gas inlet tube. Agitation was set to 500 rpm and the reaction mixture was purged with nitrogen. The stirring and the nitrogen purge were maintained throughout the reaction period. The contents were heated to 67°C and an exothermic reaction took place. After the reaction had subsided, the contents were heated to 80°C for 30 minutes and finally cooled to room temperature.

The resulting products, suspensions of polymeric microspheres, were tested for the solids content, the Brookfield viscosity and the average diameter of the microspheres. The results are listed in Table 2.

**Table 2**

| **Example** | **Solids** (%) | **Viscosity** (cps) | **Particle Diameter** (micrometers) |
|---|---|---|---|
| 2 | 32.2 | 35 | 5 |
| 3 | 29.9 | 300 | 3 |
| 4 | 34.1 | 55 | 4 |
| 5 | 19.4 | 3000 | 5 |
| 6 | 24.2 | 30 | 5 |

### Example 7

This example illustrates the synthesis of carboxylated polymeric microspheres with an average diameter of about 30 micrometers.

A 2 liter resin reactor was charged with a solution of 0.10 gram of carbon tetrabromide and 0.90 gram of 70% solids benzoyl peroxide in 240 grams of isooctyl acrylate, 60 grams of acrylic acid and a solution of 2.8 grams Siponate DS-10 in 557 grams of deionized water. The reactor was then equipped with a thermometer, a reflux condenser, a three-pronged stirrer and a gas inlet tube. Agitation was set to 500 rpm and the reaction mixture was purged with nitrogen. The stirring and the nitrogen purge were maintained throughout the reaction period. After 30 minutes of stirring at room temperature the contents were heated to 67°C and an exothermic reaction took place. When the reaction had subsided, the contents were heated to 80°C for 30 minutes and finally cooled to room temperature. The resulting product, a suspension of polymeric microspheres, had a solids content of 34.9%, a Brookfield viscosity of 300 cps and the average diameter of the microspheres was 31 micrometers.

### Example 8

This example illustrates the peel adhesion and the repulpability of polymeric microspheres.

Polymeric microspheres of Examples 1-7 were coated to Calque paper by knife coating the suspensions at a dry coating weight of 0.34 gram to 0.54 gram per 155 cm². The peel adhesion and the repulpability by the modified TAPPI Test UM-213 of the coated samples were tested. The results and the respective coating weights are listed in Table 3.

**Table 3**

| **Example** | **Coating Weight** (g/155cm²) | **Peel Adhesion** (N/dm) | **Repulpability TAPPI Test UM-213** |
|---|---|---|---|
| 1 | 0.54 | 0 | yes |
| 2 | 0.50 | 0 | marginal |
| 3 | 0.41 | 0 | no |
| 4 | 0.49 | 1.8 | marginal |
| 5 | 0.34 | 0 | yes |
| 6 | 0.43 | 0 | yes |
| 7 | 0.44 | 0.1 | yes |

### Example 9

This example illustrates the preparation of a pressure sensitive adhesive composition from the suspension of polymeric microspheres of Example 1 and Igepal CO-730.

To a 1 liter container were charged 500 grams of the suspension of polymeric microspheres of Example 1, 70.0 grams of Igepal CO-730 and 1.5 grams of polyphosphoric acid. The contents were agitated with a mechanical stirrer for about 1 hour until homogeneity was reached. The resulting pressure sensitive adhesive composition had a solids content of 55.5% and a Brookfield viscosity of 64,000 cps. A sample of the composition diluted to a solids content of 40.8% exhibited a Brookfield viscosity of 750 cps. The polymeric mixture had a glass transition temperature of -37°C.

The adhesive was also tested for washability from various surfaces. The results are summarized in Table 4.

### Examples 10-19

These examples illustrate the preparation of pressure sensitive adhesive compositions from suspensions of polymeric microspheres of Examples 1-7 and from various plasticizing agents.

The procedure of preparation of the pressure sensitive adhesive compositions was analogous to the procedure outlined in Example 9. The ingredients, the relative amounts of plasticizing agent per 100 parts by dry weight of polymeric microspheres, the solids content and the Brookfield viscosity of the compositions are listed in Table 4.

**Table 4**

| **Example** | **Polymeric Microspheres** (example no.) | **Plasticizer** | **Plasticizer** (parts by weight) | **Solids** (%) | **Viscosity** (cps) |
|---|---|---|---|---|---|
| 10 | 2 | Igepal CO-730 | 36 | 38.9 | 200 |
| 11 | 3 | Igepal CO-730 | 60 | 39.6 | 83,000 |
| 12 | 4 | Igepal CO-730 | 21 | 38.5 | 190 |
| 13 | 5 | Igepal CO-730 | 74 | 28.9 | 17,000 |
| 14 | 6 | Igepal CO-730 | 29 | 29.1 | 50 |
| 15⁽¹⁾ | 7 | Igepal CO-730 | 36 | 41.9 | 27,000 |
| 16 | 1 | Igepal CO-850 | 20 | 39.4 | 875 |
| 17 | 1 | poly(ethylene glycol) | 12 | 37.7 | 250 |
| 18⁽¹⁾ | 1 | Triton X-100 | 24 | 39.9 | 810 |
| 19 | 1 | Triton X-100 | 24 | 39.9 | 1025 |

| | | | | | |
|---|---|---|---|---|---|
| ⁽¹⁾ contains 0.6 parts by weight of phosphoric acid additive | | | | | |

Examples 10 and 18 were also tested for washability from various surfaces and the results are summarized below.

| **Surfaces** | **Washability** |
|---|---|
| **Example 10** | |
| Painted Board | Difficult with water, good with soapy water. |
| Varnished Wood | Difficult with water, fair with soapy water. |
| Smooth Plastic | Difficult with water, easy with soapy water. |
| Painted Steel | Difficult with water, hard with soapy water. |
| Glass | Easy with water. |
| Steel | |

| **Example 18** | |
|---|---|
| Painted Board | Difficult with water, good with soapy water. |
| Varnished Wood | Difficult with water, fair with soapy water. |
| Smooth Plastic | Difficult with water, good with soapy water. |
| Painted Steel | Difficult with water, hard with soapy water. |
| Glass | Easy with water. |

### Example 20

This example illustrates the pressure sensitive adhesive performance of coatings of pressure sensitive adhesive compositions of Examples 9-19 under various humidity conditions and after aging.

Pressure Sensitive adhesive compositions of Examples 9-19 were coated onto primed cellulose acetate by knife coating at a dry coating weight of about 0.50 gram per 155 square centimeters. The coated samples were tested for peel adhesion and holding power at 20% RH, 50% RH and 80% RH. The results and the respective coating weights are listed in Table 5.

**Table 5**

| **Example** | **Coating Weight** (g/155c m²) | **Peel Adhesion** (N/dm) | | | **Holding Power** (minutes) | | |
|---|---|---|---|---|---|---|---|
| | | **20% RH** | **50% RH** | **80% RH** | **20% RH** | **50% RH** | **80% RH** |
| 9 | 0.50 | 26 | 22 | 19 | 225 | 17 | 1.0 |
| 10 | 0.52 | 15 | 12 | 10 | 110 | 17 | 2.6 |
| 11 | 0.49 | 9.6 | 9.7 | 5.6 | 375 | 79 | 6.7 |
| 12 | 0.49 | 11 | 14 | 13 | 127 | 9 | 0.6 |
| 13 | 0.38 | 18 | 14 | 8.9 | 128 | 20 | 1.3 |
| 14 | 0.36 | 9.1 | 11 | 9.2 | 188 | 29 | 1.7 |
| 15 | 0.37 | 3.2 | 8.7 | 4.9 | 25 | 8 | 0.3 |
| 16 | 0.53 | 8.5 | 20 | 18 | 309 | 130 | 3.7 |
| 17 | 0.48 | 15 | 18 | 12 | 1303 | >2000 | 21 |
| 18 | 0.53 | 22 | 21 | 12 | >2000 | 296 | 4.7 |
| 19 | 0.51 | 11 | 19 | 17 | 184 | 609 | 16 |

The coated pressure sensitive adhesive composition of Example 9 was retested for the peel adhesion and the holding power at 50% RH after having undergone accelerated aging at 49°C for one week and scored 22 N/dm and 88 minutes, respectively.

### Example 21

This example illustrates the repulpability of coatings of pressure sensitive adhesive compositions of Examples 9-19.

Pressure Sensitive adhesive compositions of Examples 9-19 were coated to Calque paper in the manner described in Example 20. All the coated samples were found to have a satisfactory repulpability by the modified TAPPI Test UM-213, as seen by the absence of unrepulped material in the handsheets.

### Example 22

This example illustrates the peel adhesion of pressure sensitive adhesive compositions of this invention to various substrates, other than a steel panel used in Example 20, as compared to 810 Magic™ Tape (commercially available from 3M Company).

Coatings of pressure sensitive adhesive compositions of Examples 9, 10 and 18, prepared in Example 20, and strips of 810 Magic™ Tape were tested for the peel adhesion to a glass plate, a polyester OR-16 film (commercially available from 3M Company) and an acrylonitrile butadiene styrene plastic panel (commercially available from Sterling Plastic, Inc.). The test method used was the same as described above and the results are listed in Table 6.

**Table 6**

| **Example** | **Peel Adhesion** (N/dm) | | |
|---|---|---|---|
| | **Glass** | **Polyester OR-16** | **Plastic Panel** |
| 9 | 12 | 12 | 22 |
| 10 | 13 | 8.6 | 17 |
| 18 | 17 | 14 | 25 |
| 810 Magic™ Tape | 6.0 | 9.3 | 16 |

### Example 23

This example investigates the occurrence of unwanted polymer migration of pressure sensitive adhesive coatings in application to papers.

### Examples 24-28

These examples illustrate the preparation of pressure sensitive adhesive compositions from a suspension of polymeric microspheres and various amounts of plasticizing agent and how the relative amounts of the same ingredients affect pressure sensitive adhesive performance.

The procedure of preparation of the pressure sensitive adhesive compositions was analogous to the procedure outlined in Example 9 and the ingredients employed for each were 100 parts by dry weight of polymeric microspheres of Example 2 and various parts by weight of Igepal CO-730. The pressure sensitive adhesive compositions were coated in the manner described in Example 20 and tested for the peel adhesion, the holding power and the repulpability. The relative amounts of Igepal CO-730 used and the test results are listed in Table 7.

**Table 7**

| **Example** | **Igepal CO-730** (parts by weight) | **Peel Adhesion** (N/dm) | **Holding Power** (minutes) | **Repulpability TAPPI Test UM-213** |
|---|---|---|---|---|
| 24 | 12 | 18 | >2000 | marginal |
| 25 | 20 | 20 | 265 | yes |
| 26 | 28 | 12 | 76 | yes |
| 27 | 36 | 12 | 17 | yes |
| 28 | 44 | 9.8 | 9 | yes |

### Example 29

This example illustrates the production of modified "calque" paper backing according to the preferred specifications at Papeteries Canson & Montgolfier (Annonay, France) starting by pulping spruce wood using an alkaline Kraft method. The bulk pulp was beaten for approximately eight (8) hours at 71°C and at a pH greater than 10. The pulp was then diluted to 5% consistency by weight and applied to a paper machine wire.

Paper sheets were formed, as the wire web was allowed to slowly drain, thus allowing for fiber orientation. The paper coated wire web was further dried using forced air, infrared ovens until the paper coated web was dried sufficiently to support itself independent of the wire web. The paper web was then removed from the wire web and applied to a felt web for further drying. The paper web was calendered.

At this point, a release size coating was applied to the paper. The release size coating composition was a *polysiloxane release agent, commercially available* from Dow Corning. The release sizing agent consisted of a solution of 4 parts by weight of a polysiloxane (a 50% solids aqueous emulsion, under the tradename of Syl-Off 1711), mixed with 0.13 parts by weight of a tin catalyst (a 50% solids aqueous emulsion, under the tradename of Syl-Off 1711A) (both commercially available from Dow Corning) in 95.87 parts water. The solution was applied onto the calque paper by means of an air knife size press coater and cured. The sized paper was then remoisturized and dried in the normal manner on the size press to achieve a flat, stable paper backing. The paper was dried again and calendered to the desired basis weight and to a nominal caliper of 0.46 mm, with a moisture content of between 6 to 7.5 % by weight. The translucency of the finished paper is typically greater than 70% with a uniform appearance without speckling. The reflectance (gloss) of the preferred paper is between 6-12 (dimensionless), as measured by TAPPI T4880-OM92. The preferred paper has a color of L>8.5, a=- 2 to -0.6, b=2 to 5, as measured by TAPPI T254 and a surface smoothness of between 30-60 (dimensionless) as measured by TAPPI UM518.

### Example 30

This example illustrates the composition of the repulpable rolls of tape that illustrate one particularly useful construction according to the present invention. Calque paper backing prepared according to the process described in Example 29 was coated on the non-release coated side with the pressure sensitive adhesive coating prepared according to process described in Example 9 at a dry coat weight of about 0.50 gram/155 cm². The adhesive coated web was dried by passing it through an oven at about 110°C for about 15 seconds. The adhesive coated web was then wound upon itself forming a jumbo roll with the pressure sensitive adhesive coating on the inside of the roll. The jumbo roll was subsequently slit into a number of smaller rolls having a nominal width of 1.9 cm.

### Example 31

This example illustrates the ease of removal of the tape of the present invention from various surfaces with water and/or soapy water. The repulpable tape was prepared according to the description in Example 30. Tape material dispensed from the rolls of tape was found to have an ease of removal shown in Table 8.

**Table 8**

| **Surfaces** | **Washability** |
|---|---|
| Painted board | Hard with water, good with soapy water. |
| Varnished wood | Difficult with water, fair with soapy water. |
| Smooth plastic | Difficult with water, easy with soapy water. |
| Painted steel | Hard with water, good with soapy water. |
| Glass | Easy with water. |

### Example 32

This example illustrates the construction of an easy to wash away from fabric label stock that comprises one of the useful constructions of this invention. The label stock consisting of (1) a repulpable paper backing substrate, (2) a repulpable pressure sensitive adhesive layer as described in Example 9 was coated on one face of the backing substrate and laminated to (3) a release backing substrate as described in Example 29, on the same side. The label stock, normally after receiving a printed image, is applied to various fabric substrates as stated in "Ease of Removal from Fabrics" test procedures. The results are summarized in Table 9.

**Table 9**

| **Surfaces** | **Washability** | **Stains** |
|---|---|---|
| Cotton sheet | Clean | None |
| 65/35 Black smock | Clean | None |
| 50/50 T-shirt | Clean | None |

### Example 33

This example illustrates the construction of a easy to wash away dishes label stock that comprises one of the useful constructions of this invention. The label stock consisting of (1) a repulpable paper backing substrate, (2) a repulpable pressure sensitive adhesive layer as described in Example 9 was coated on one face of the backing substrate and laminated to (3) a release backing substrate as described in Example 29, on the same side. The label stock, normally after receiving a printed image, is applied to various dish substrates as stated in "Ease of Removal from Dishes" test procedures. The results are summarized in Table 10.

**Table 10**

| **Surfaces** | **Washability** | **Stains** |
|---|---|---|
| Ceramic dish | Clean | None |
| China cup | Clean | None |
| Plastic dish | Clean | None |
| TupperWare™ container | Clean | None |

## Claims

1. A repulpable pressure sensitive adhesive comprising a mixture of a plurality of water-insoluble, water-dispersible polymeric microspheres and at least one water-soluble plasticizing agent, wherein the average diameter of the microspheres is below 50 micrometers.

2. The repulpable pressure sensitive adhesive according to claim 1 wherein the adhesive comprises a blended mixture of:
(a) 100 parts by dry weight of carboxylated polymeric microspheres, formed by suspension polymerization from monomers consisting essentially of:
(1) about 50-90 weight percent of at least one monomeric alkyl (meth)acrylate of alkyl alcohol having 4-14 carbon atoms and,
(2) about 50-10 weight percent of vinyl carboxylic acid,
(b) about 5-150 parts by weight of at least one water-soluble plasticizing polyalkyleneoxy compound per 100 parts by dry weight of carboxylated polymeric microspheres, and,
(c) optionally, 0.2-2.0 parts by weight of mineral acid per 100 parts by dry weight of carboxylated polymeric microspheres.

3. A repulpable tape construction comprising:
(1) a paper backing substrate,
(2) a layer of the repulpable pressure sensitive adhesive according to claim 1 coated onto one face of the paper backing substrate, and
(3) a release layer composition coated onto the other face of the paper backing substrate.

4. A repulpable sheet comprising a layer of paper backing substrate having a coating of the repulpable pressure sensitive adhesive according to claim 1 on a second end portion, while being free of adhesive along a first end portion.

5. A repulpable pad of sheets in a stack, each of the sheets comprising a layer of paper backing substrate, having opposite major side surfaces and first and second opposite ends, and having a coating of the repulpable pressure sensitive adhesive according to claim 1 on a second end portion of one of the side surfaces adjacent the second end while being free of adhesive on both of the side surfaces along a first end portion thereof adjacent the first side, the sheets being releasable adhered to each other by the coatings of the pressure sensitive adhesive to form a stack with adjacent ends of the sheet aligned and with the first and second end of the successive sheets in the stack being adjacent.

6. An adhesive coated sheet of labels comprising:
(1) a label substrate;
(2) a layer of repulpable pressure sensitive adhesive according to claim 1 coated onto one face of the backing substrate, and
(3) a release layer composition coated onto the other face of the backing substrate.

7. A repulpable tape construction comprising:
(1) a repulpable backing substrate, wherein the repulpable backing substrate is a calque paper having a nominal caliper of 0.41-0.76 mm and moisture content of between 6-7.5% by weight,
(2) a layer of the repulpable pressure sensitive adhesive according to claim 1 coated onto one face of the backing substrate, and
(3) a release layer composition coated onto the other face of the backing substrate.

8. The repulpable tape according to claim 7, wherein the calque paper has a translucency greater than 70%, with a uniform appearance without speckling.

9. The repulpable tape construction according to claim 7 wherein the release layer composition comprises a solution of 0.5 to 30 parts by weight of a polysiloxane release agent (a 50% solids aqueous emulsion), mixed with 0.01 to 6.0 parts by weight of a tin catalyst (a 50% solids aqueous emulsion) in 64 to 98.5 parts by weight of water.

10. An adhesive tape comprising a layer of a repulpable adhesive according to claim 2 on at least a portion of a first side of a background substrate, and a second layer of repulpable adhesive on at least a portion of the second side of the backing substrate, the second side of the backing substrate being opposite the first side of the backing substrate.

11. A transfer tape comprising a layer of repulpable adhesive according to claim 2 on at least a portion of a first side of a release liner.

## Patentansprüche

1. Wiederaufbereitbarer Haftklebstoff, umfassend ein Gemisch aus einer Vielzahl wasserunlöslicher, wasserdispergierbarer polymerer Mikrokügelchen und mindestens einem wasserlöslichen Weichmacher, wobei der mittlere Durchmesser der Mikrokügelchen unter 50 Mikrometern liegt.

2. Wiederaufbereitbarer Haftklebstoff gemäß Anspruch 1, wobei der Klebstoff ein vermischtes Gemisch von:
(a) 100 Trockengewichtsteilen carboxylierter polymerer Mikrokügelchen, erzeugt durch Suspensionspolymerisation aus Monomeren, bestehend im wesentlichen aus:
(1) etwa 50-90 Gewichtsprozent mindestens eines monomeren Alkyl(meth)acrylats von Alkylalkohol mit 4-14 Kohlenstoffatomen, und
(2) etwa 50-10 Gewichtsprozent Vinylcarbonsäure,
(b) etwa 5-150 Gewichtsteilen mindestens einer wasserlöslichen weichmachenden Polyalkylenoxyverbindung pro 100 Trockengewichtsteilen carboxylierter polymerer Mikrokügelchen, und
(c) gegebenenfalls 0,2-2,0 Gewichtsteilen Mineralsäure pro 100 Trockengewichtsteilen carboxylierter polymerer Mikrokügelchen umfaßt.

3. Wiederaufbereitbare Bandkonstruktion, umfassend:
(1) ein Papierträgersubstrat,
(2) eine Schicht des wiederaufbereitbaren Haftklebstoffs gemäß Anspruch 1, aufgebracht auf eine Oberfläche des Papierträgersubstrats, und
(3) eine Trennschichtzusammensetzung, aufgebracht auf die andere Oberfläche des Papierträgersubstrats.

4. Wiederaufbereitbares Blatt, umfassend eine Schicht Papierträgersubstrat, das eine Beschichtung des wiederaufbereitbaren Haftklebstoffs gemäß Anspruch 1 auf einem zweiten Endteil aufweist, während es entlang eines ersten Endteils frei von Klebstoff ist.

5. Wiederaufbereitbarer Block aus Blättern in einem Stapel, wobei jedes der Blätter eine Schicht Papierträgersubstrat umfaßt, das gegenüberliegende Hauptseitenoberflächen und erste und zweite gegenüberliegende Enden aufweist und eine Beschichtung des wiederaufbereitbaren Haftklebstoffs gemäß Anspruch 1 auf einem zweiten Endteil einer der Seitenoberflächen angrenzend an das zweite Ende aufweist, während es auf beiden Seitenoberflächen entlang eines ersten Endteils davon angrenzend an die erste Seite frei von Klebstoff ist, wobei die Blätter durch die Beschichtungen des Haftklebstoffs lösbar aufeinander geklebt sind, um einen Stapel zu erzeugen, wobei die angrenzenden Enden des Blattes ausgerichtet sind und wobei das erste und zweite Ende der aufeinanderfolgenden Blätter in dem Stapel aneinandergrenzend sind.

6. Mit Klebstoff beschichtetes Blatt mit Etiketten, umfassend
(1) ein Etikettensubstrat;
(2) eine Schicht wiederaufbereitbaren Haftklebstoffs gemäß Anspruch 1, aufgebracht auf eine Oberfläche des Trägersubstrats, und
(3) eine Trennschichtzusammensetzung, aufgebracht auf die andere Oberfläche des Trägersubstrats.

7. Wiederaufbereitbare Bandkonstruktion, umfassend:
(1) ein wiederaufbereitbares Trägersubstrat, wobei das wiederaufbereitbare Trägersubstrat ein Calque-Papier mit einer Nenndicke von 0,41-0,76 mm und einem Feuchtigkeitsgehalt zwischen 6-7,5 Gew.-% ist,
(2) eine Schicht des wiederaufbereitbaren Haftklebstoffs gemäß Anspruch 1, aufgebracht auf eine Oberfläche des Trägersubstrats, und
(3) eine Trennschichtzusammensetzung, aufgebracht auf die andere Oberfläche des Trägersubstrats.

8. Wiederaufbereitbares Band gemäß Anspruch 7, wobei das Calque-Papier eine Lichtdurchlässigkeit von mehr als 70%, mit einem gleichmäßigen Aussehen ohne Fleckigkeit, aufweist.

9. Wiederaufbereitbare Bandkonstruktion gemäß Anspruch 7, wobei die Trennschichtzusammensetzung eine Lösung von 0,5 bis 30 Gewichtsteilen eines Polysiloxan-Trennmittels (eine wäßrige Emulsion mit 50% Feststoffen), gemischt mit 0,01 bis 6,0 Gewichtsteilen eines Zinnkatalysators (eine wäßrige Emulsion mit 50% Feststoffen) in 64 bis 98,5 Gewichtsteilen Wasser umfaßt.

10. Klebeband, umfassend eine Schicht eines wiederaufbereitbaren Klebstoffs gemäß Anspruch 2 auf zumindest einem Teil einer ersten Seite eines Trägersubstrats und eine zweite Schicht wiederaufbereitbaren Klebstoffs auf zumindest einem Teil der zweiten Seite des Trägersubstrats, wobei die zweite Seite des Trägersubstrats der ersten Seite des Trägersubstrats gegenüberliegt.

11. Übertragungsband, umfassend eine Schicht wiederaufbereitbaren Klebstoffs gemäß Anspruch 2 auf zumindest einem Teil einer ersten Seite einer Trenneinlage.

## Revendications

1. Adhésif sensible à la pression apte à reformer une pulpe comprenant un mélange d'une multiplicité de microsphères polymériques insolubles à l'eau, dispersibles à l'eau et d'au moins un agent plastifiant hydrosoluble, dans lequel le diamètre moyen des microsphères est inférieur à 50 micromètres.

2. Adhésif sensible à la pression apte à reformer une pulpe selon la revendication 1 dans lequel l'adhésif comprend un mélange de :
(a) 100 parties en poids sec de microsphères polymériques carboxylatées, formées par polymérisation en suspension à partir de monomères constitués essentiellement de :
(1) environ 50 à 90 pour cent en poids d'au moins un (méth)acrylate d'alkyle monomérique d'un alcool alkylique ayant de 4 à 14 atomes de carbone et,
(2) environ 50 à 10 pour cent en poids d'acide vinylcarboxylique,
(b) environ 5 à 150 parties en poids d'au moins un composé plastifiant hydrosoluble polyalkylèneoxy pour 100 parties en poids sec de microsphères polymériques carboxylatées, et,
(c) éventuellement de 0,2 à 2,0 parties en poids d'acide minéral pour 100 parties en poids sec de microsphères polymériques carboxylatées.

3. Configuration de ruban apte à reformer une pulpe comprenant :
(1) un substrat support en papier,
(2) une couche de l'adhésif sensible à la pression apte à reformer une pulpe selon la revendication 1 déposée sur une face du substrat support en papier, et
(3) une composition de film anti-adhérent déposée sur l'autre face du substrat support en papier.

4. Feuille apte à reformer une pulpe comprenant un film du substrat support en papier ayant une couche de l'adhésif sensible à la pression apte à reformer une pulpe selon la revendication 1 sur une seconde portion d'extrémité, tout en étant non recouverte d'adhésif sur une première portion d'extrémité.

5. Plaquette apte à reformer une pulpe composée de feuilles empilées, chacune des feuilles comprenant un film de substrat support en papier, ayant des surfaces latérales principales en face l'une de l'autre et une première et une seconde extrémités se faisant face, et ayant une couche de l'adhésif sensible à la pression apte à reformer une pulpe selon la revendication 1 sur une seconde portion d'extrémité de l'une des surfaces latérales adjacente à la seconde extrémité tout en étant exempte d'adhésif sur les deux surfaces latérales le long d'une première portion d'extrémité de celles-ci adjacente à la première face, les feuilles adhérant d'une manière repositionnable les unes aux autres au moyen des couches de l'adhésif sensible à la pression pour former une pile avec les extrémités adjacentes de la feuille alignées et avec la première et la seconde extrémité des couches successives dans la pile étant adjacentes.

6. Feuille d'étiquettes revêtues d'adhésif comprenant :
(1) un substrat pour étiquettes;
(2) une couche d'adhésif sensible à la pression apte à reformer une pulpe selon la revendication 1 déposée sur une face du substrat support, et
(3) une composition de film antiadhérent déposée sur l'autre face du substrat support.

7. Configuration de ruban apte à reformer une pulpe comprenant :
(1) un substrat support apte à reformer une pulpe, dans lequel le substrat support apte à reformer une pulpe est un papier calque ayant une épaisseur nominale variant de 0,41 à 0,76 mm et un taux d'humidité variant entre 6 et 7,5% en poids,
(2) une couche de l'adhésif sensible à la pression apte à reformer une pulpe selon la revendication 1 déposée sur une face du substrat support, et
(3) une composition de film anti-adhérent déposée sur l'autre face du substrat support.

8. Ruban apte à reformer une pulpe selon la revendication 7, dans lequel le papier calque a une transparence supérieure à 70%, avec un aspect uniforme sans moucheture.

9. Configuration de ruban apte à reformer une pulpe selon la revendication 7 dans laquelle la composition de film antiadhérent comprend une solution de 0,5 à 30 parties en poids d'un agent antiadhérent polysiloxane (une émulsion aqueuse à 50% de matières solides), mélangée avec de 0,01 à 6,0 parties en poids d'un catalyseur à l'étain (une émulsion aqueuse à 50% de matières solides) dans 64 à 98,5 parties en poids d'eau.

10. Ruban adhésif comprenant une couche d'un adhésif apte à reformer une pulpe selon la revendication 2 sur au moins une portion d'une première face d'un substrat de base, et une seconde couche d'adhésif apte à reformer une pulpe sur au moins une portion de la seconde face du substrat de base, la seconde face du substrat de base étant en face de la première face du substrat de base.

11. Ruban transfert comprenant une couche d'adhésif apte à reformer une pulpe selon la revendication 2 sur au une portion d'une première face d'un film antiadhérent.
